# EUROPEAN PATENT SPECIFICATION

(11) **EP 3 037 356 B1**
(45) Date of publication and mention of the grant of the patent: **29.11.2017**
(21) Application number: 14200330.0
(22) Date of filing: 24.12.2014
(51) Int. Cl.: B65B 61/24

(54) **A forming apparatus for forming a base of a container**
Vorrichtung zum Formen eines Bodens eines Behälters
Appareil pour former une base de recipient

(43) Date of publication of application: 29.06.2016
(73) Proprietor: SIDEL PARTICIPATIONS, S.A.S., 76930 Octeville-sur-Mer (FR)
(72) Inventor: Molinari, Stefano, 43126 PARMA (IT); Pace, Raffaele, 43126 PARMA (IT)
(74) Representative: Siloret, Patrick

(56) References cited:
- DE-A1-102008 026 244
- FR-A1- 2 451 886
- US-A- 2 656 084
- US-A1- 2009 218 003

## Description

### TECHNICAL FIELD

The present invention relates to a forming apparatus for forming a base of a container, such as for example a plastic bottle, filled with a pourable product and closed with a cap.

The present invention is advantageously but not exclusively applicable in the sector of plastic hot fill containers, which the following description will refer to, although this is in no way intended to limit the scope of protection as defined by the accompanying claims.

### BACKGROUND ART

As known, the containers of the above mentioned type, after having been filled with hot - for example at about 85°C - pourable products or liquids, are first subjected to a capping operation and then cooled so as to return to a room temperature. By effect of the capping operation, the heated air present in the top portion ("head space") of the container expands causing a stress tending to produce a general swelling of the container at the side wall and at the base wall.

The following cooling to which the container is subjected, causes, vice versa, a reduction of the volume of air and minimally of the product contained in the container; a depression is therefore created, which tends to pull the side walls and the base wall of the container inwards. This may determine deformations in the walls of the container if these are not rigid enough to resist the action of the above disclosed stresses.

In order to compensate the depressive stresses generated during the cooling of the product within the containers without generating undesired deformations on the containers, they are typically provided, at their side walls, with a series of vertical panels, known as "vacuum panels". These panels, in the presence of depressive stresses, are deformed inwardly of the relative container allowing it to resist to the hot fill process without generating undesired deformations in other areas of the container itself.

Likewise, the known containers intended to be subjected to a hot fill process can also have an optimised lower portion or base adapted to be deformed upwards under the action of the depressive stresses.

Even though the disclosed solutions allow to "relieve" the pressure stresses on specific parts of the containers, i.e. the vertical vacuum panels or the base, thus avoiding the occurrence of undesired deformations in other parts of the containers, they do not allow the cancellation of the above said stresses; in other words, the containers remain in any case subject to internal depressive stresses and must therefore be provided with a structure capable of resisting such stresses.

Patent application WO2006/068511 shows a container having a deformable base, which can have two different configurations: a first unstable configuration, in which this base has a central area projecting downwards with respect to the outermost annular area immediately adjacent thereto, and a second stable configuration, in which the central area is retracted inwardly of the container, i.e. it is arranged at a higher position with respect to the adjacent annular area.

Following the filling with the hot pourable product, the base of the container is deformed into the first unstable configuration and must be supported by a special cup element to which it is coupled. Thereby, the downward deformation of the base of the container can be maximised without compromising the stable support of the container, since such a support is provided by the cup element. Following the cooling, the base can be displaced by an external action, for example a vertical thrust upwards performed by a rod or plunger, in the second stable configuration with the subsequent possibility of removing the cup element.

The displacement of the base of the container from the first to the second configuration determines a considerable reduction of the containment volume of the container, much higher than that would be obtained in the known containers simply by the deformation of the base by the effect of the sole depressive stresses; the final effect is therefore substantially the cancellation of the depressive stresses acting on the inside of the container.

The applicant has observed that this kind of operation may become quite critical, in particular when the time necessary to perform the deformation of the base of each container has to be strongly limited or reduced, for instance due to production constraints; in such cases, the plastic material may return at least in part towards the original first configuration after release of the plunger; this normally occurs when the plastic material has a reaction time exceeding the time for performing the operation of deformation.

The non-correctly formed containers have therefore to be rejected at the end of the production line.

Another problem posed in connection with the described containers is the complexity of the plant layout for producing them. In particular, the disclosed containers must be subjected to the following operations to achieve their final shape:
- a filling operation with the hot pourable product on a filling machine;
- a subsequent operation of capping on a capping machine;
- a cooling operation in an appropriate station; and
- a deforming operation on a forming machine, in which the bases of the containers are mechanically displaced from the first to the second configuration.

As known, the filling machines, the capping machines and the forming machines are generally rotating machines, in which the containers are fed on respective carousels. In particular, each carousel is provided with a plurality of operative units for receiving and processing the containers, uniformly distributed about the rotation axis of the carousel; more precisely, each operative unit is commonly provided with an element for supporting the relative container which maintains it in a predetermined position for carrying out the specific operation/s.

Patent application US 2009/0218003 shows such an apparatus according to the preamble of claim 1.

As can be easily noted, the above-described process for the production of filled and closed containers is rather time-consuming and requires considerable room within the relative plants; in order to carry out the different operations indicated, it is necessary to provide a relatively high number of carousel-type machines and linear and starwheel conveyors adapted to transfer the containers from a machine to another.

### DISCLOSURE OF INVENTION

It is therefore an object of the present invention to find a simple and cost-effective solution to solve at least one of the above described problems.

This object is achieved by a forming apparatus as claimed in claim 1.

### BRIEF DESCRIPTION OF THE DRAWINGS

A preferred embodiment is hereinafter disclosed for a better understanding of the present invention, by mere way of non-limitative example and with reference to the accompanying drawings, in which:
- Figure 1 shows a side view of a forming apparatus according to the present invention, with parts removed for clarity;
- Figure 2 shows a top plan view of the forming apparatus of Figure 1, with parts removed for clarity;
- Figure 3 shows a larger-scale section along line III-III in Figure 1;
- Figure 4 shows a larger-scale front view of a detail of Figure 3, with parts removed for clarity; and
- Figure 5 shows a larger-scale section along line V-V in Figure 1.

### BEST MODE FOR CARRYING OUT THE INVENTION

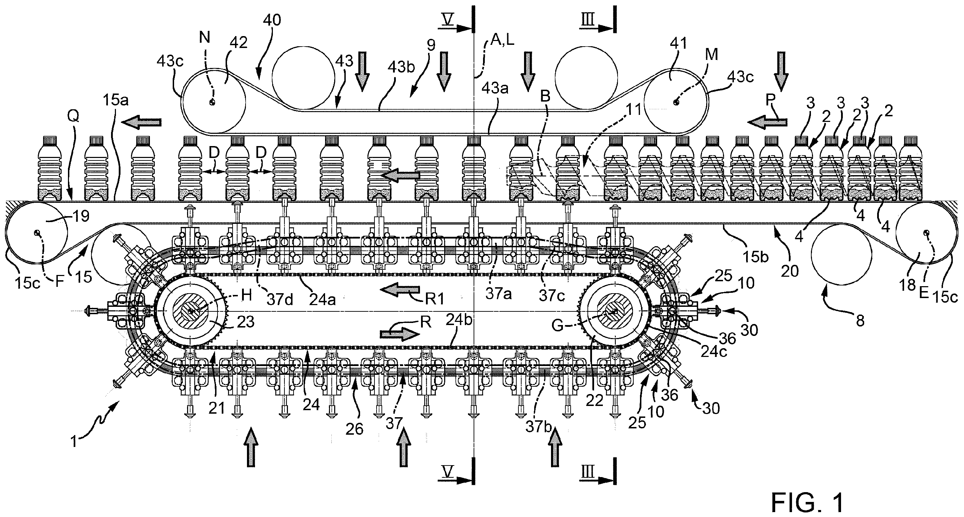

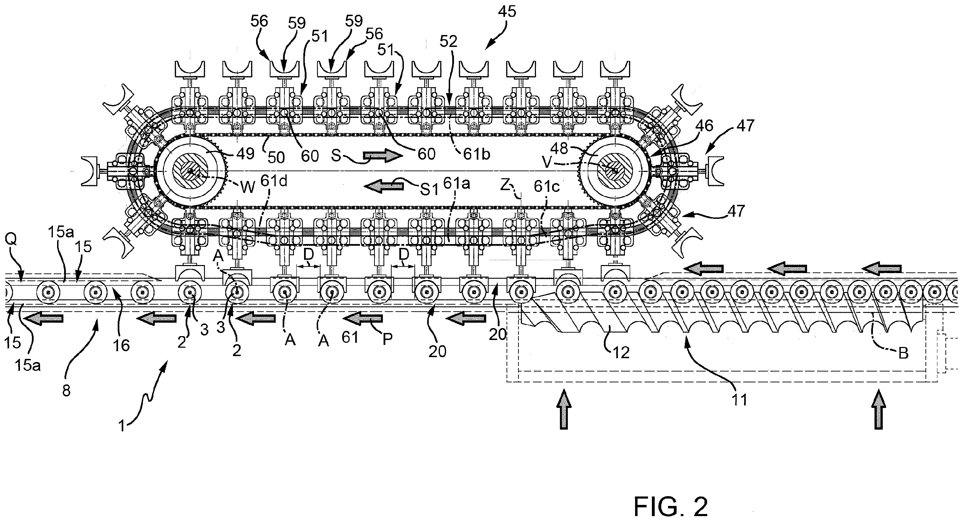

With reference to Figures 1 and 2, numeral 1 indicates as a whole a forming apparatus for forming containers, such as for example plastic bottles 2, filled with a pourable product and closed with removable caps 3.

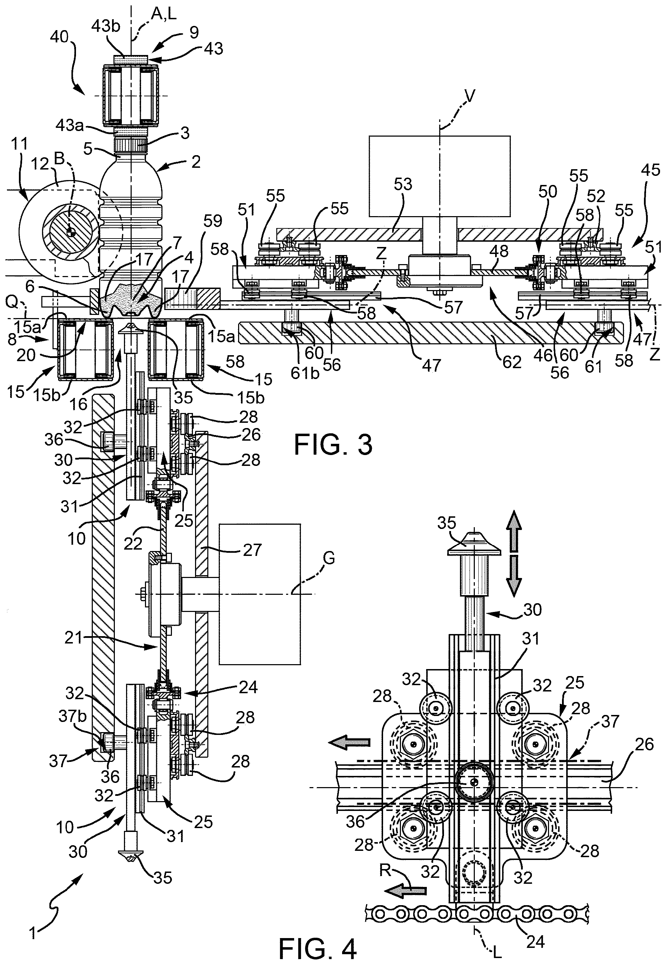

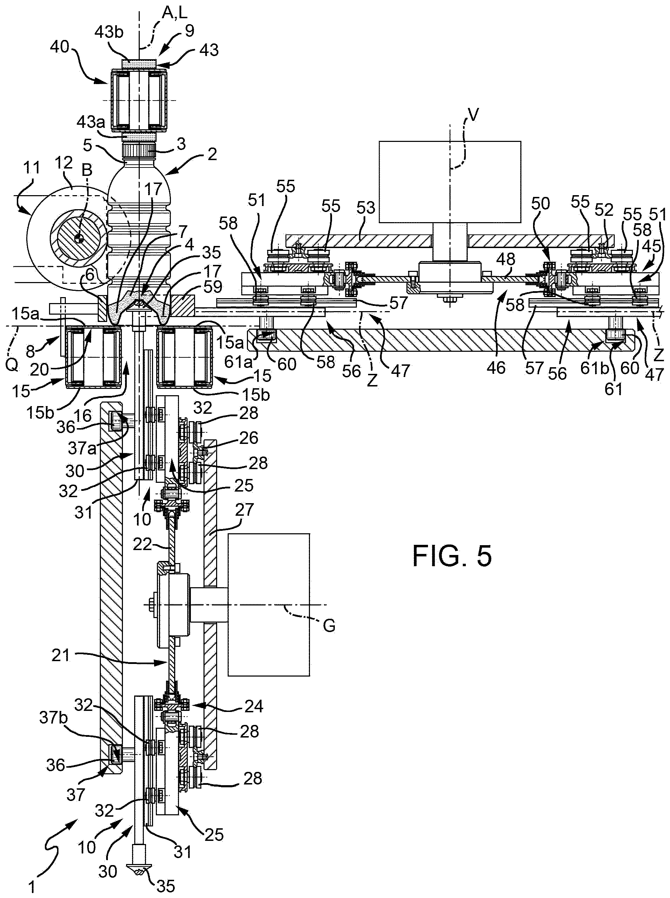

As may be seen in detail in Figures 3 and 5, each bottle 2 has a longitudinal axis A, a base 4 and a neck 5 defining an opening (not visible) for pouring the product contained in the bottle 2 and closed with the cap 3.

In the case shown, the base 4 of each bottle 2 has an annular area 6 having axis A, radially external and defining an annular resting surface of the bottle 2 itself, and a recessed central area 7, surrounded by annular area 6 and arranged normally higher along axis A with respect to annular area 6 in a vertical position of the bottle 2, i.e. with neck 5 placed above base 4; in other words, central area 7 is arranged at a distance from neck 5 along axis A smaller than the distance between neck 5 and annular area 6.

The base 4 of each bottle 2 is deformable and can have two different configurations, shown in Figures 3 and 5. In the first configuration (Figure 3), central area 7 of base 4 is deformed and swollen downwards, i.e. it is arranged at a maximum distance from neck 5 along axis A so as to define a maximum internal volume of the relative bottle 2; in the second configuration (Figure 5), central area 7 is instead retracted inwardly of the relative bottle 2 with respect to the first configuration, i.e. central area 7 is arranged at a smaller distance along axis A from neck 5 with respect to the first configuration. It is apparent that each bottle 2 has, in the second configuration of its base 4, a containing volume smaller than that in the first configuration.

In the case shown, bottles 2 are fed to forming apparatus 1 after having been filled with a hot - for example at about 85°C - pourable product or liquid, closed with the respective caps 3 and subjected to a cooling operation so as to return to a room temperature.

Base 4 of each bottle 2 is therefore arranged in the first configuration, i.e. it is deformed and swollen downwards, and within the bottle 2 there are depressive stresses which tend to displace the relative base 4 towards the second configuration.

Each bottle 2 reaches forming apparatus 1 in a vertical position, i.e. with its base 4 arranged on the bottom with respect to its neck 5 and to its cap 3.

Each bottle 2 is released from forming apparatus 1 in its vertical position and with its base 4 in the second configuration, which corresponds to the desired final configuration.

With reference to Figures 1 to 3 and 5, forming apparatus 1 essentially comprises:
- a conveying device 8 for advancing in use a succession of bottles 2 in their vertical positions and along a path P orthogonal to the axes A of the bottles 2 themselves;
- upper retaining means 9, which are arranged in use above the bottles 2 moving along path P and cooperate in use with the caps 3, i.e. with the top parts, of such bottles 2; and
- a plurality of deformation devices 10, which are arranged below path P, are advanced in use to follow respective bottles 2 moving along the path P itself and are configured to interact with such bottles 2 to deform their bases 4 from the first configuration to the second configuration.

In practice, deformation devices 10 extend on the opposite side of path P with respect to upper retaining means 9.

As visible in Figures 1, 2, 3 and 5, bottles 2 are brought at desired spacings D between each other along conveying device 8 by a variable-pitch feed screw 11 of known type.

In particular, feed screw 11 has an axis B parallel to path P and is arranged on one side of the path P itself; more specifically, feed screw 11 is positioned at an inlet section of forming apparatus 1 and has in use a rotating motion about its axis B.

Feed screw 11 comprises a thread 12 having an increasing pitch along path P and, during its rotation about axis B, cooperates in use laterally with the bottles 2 advanced by the conveying device 8 to bring them at the desired spacings D.

As clearly shown in Figures 3 and 5, conveying device 8 advantageously comprises two substantially parallel and aligned linear conveyors 15 arranged side by side, defining a linear gap 16 therebetween and having respective horizontal linear transport branches 15a lying on a common horizontal plane Q and configured to support respective opposite side portions 17 of the annular area 6 of the base 4 of each bottle 2.

In this way, while being transported by conveyors 15, the base 4 of each bottle 2 has its central area 7 placed above gap 16 and facing the latter in order to interact with a respective deformation device 10, as it will explained in detail later on (see in particular Figures 3 and 5).

As a consequence of the structure of conveyors 15, path P has a linear configuration.

More specifically, each conveyor 15 is of belt-type and comprises a driving pulley 18, a driven pulley 19 and an endless belt 20 wound about respective pulleys 18, 19.

In particular, pulleys 18, 19 have respective horizontal axes E, F orthogonal to path P and to the axes A of the bottles 2 transported by conveyors 15.

Each belt 20 comprises:
- the relative transport branch 15a;
- a linear return branch 15b, which is parallel to the transport branch 15a and is arranged below the latter; and
- curved connection portions 15c, which connect respective end portions of the transport branch 15a to corresponding end portions of the return branch 15b.

According to a possible alternative not shown, conveyors 15 may be also of chain-type or of any suitable type including an endless, flat transport element wound about at least two pulleys.

With reference to Figures 1, 3 and 5, forming apparatus 1 also comprises a further linear conveyor 21, distinct from conveyors 15, placed below the conveyors 15 and configured to advance the deformation devices 10 along a path R, distinct from path P and having a linear operative portion R1, which is parallel to the path P itself and along which the deformation devices 10 extend within gap 16.

In particular, conveyor 21 is of chain-type and comprises a driving pulley 22, a driven pulley 23 and an endless chain 24 wound about respective pulleys 22, 23.

Deformation devices 10 are connected to respective equally spaced portions of chain 24 so as to be moved by the latter along path R; more specifically, deformation devices 10 are placed along chain 24 at the same spacings D between each other as the bottles 2 on which such deformation devices 10 are destined to act.

Conveyor 21 is synchronized with conveyors 15 so that each deformation device 10 interact with one specific bottle 2 advanced along path P.

Pulleys 22, 23 have respective horizontal axes G, H parallel to axes E, F and orthogonal to path P.

Chain 24 comprises:
- an upper linear operative branch 24a parallel to transport branches 15a of conveyors 15 and defining linear portion R1 of path R;
- a linear return branch 24b, which is parallel to the operative branch 24a and is arranged below the latter; and
- curved connection portions 24c, which connect respective end portions of the operative branch 24a to corresponding end portions of the return branch 24b.

According to a possible alternative not shown, conveyor 21 may be also of belt-type or of any suitable type including an endless, flat transport element wound about at least two pulleys.

With reference to Figures 1 and 3 to 5, each deformation device 10 comprises a carriage 25 secured to a relative portion of chain 24 and coupled in a sliding manner with an endless fixed guide 26 extending parallel to chain 24.

In particular, guide 26 is formed as an endless rib protruding towards conveyor 21 from a fixed wall 27 arranged on one side of conveyor 21 and extending orthogonally to axes G, H of pulleys 22, 23.

Each carriage 25 is provided with four wheels 28 sliding in pairs on opposite sides of guide 26; in this way, each carriage 25 is supported by the guide 26 during its motion imparted by chain 24.

Each deformation device 10 further comprises a plunger element 30 adapted to interact with a relative bottle 2 to produce deformation of the base 4 thereof and carried by the relative carriage 25 in a sliding manner along an axis L orthogonal to the portion of chain 24 to which the carriage 25 itself is connected.

In particular, when each deformation device 10 runs along the portion R1 of path R, axis L of the relative plunger element 30 is orthogonal to such portion R1 and is coaxial to the axis A of the bottle 2 on which such deformation device 10 is destined to act.

In greater details, each plunger element 30 has a longitudinal bar 31 coupled in a sliding manner with two pairs of wheels 32 of the relative carriage 25 in such a way that the plunger element 30 is displaceable along the relative axis L with respect to the carriage 25 itself. In this way, during its displacements along the relative axis L, each plunger element 30 is guided by the wheels 32 of the relative carriage 25.

More specifically, each plunger element 30 moves axially between a first rest position (not shown), wherein it is arranged at a minimum distance from the portion of chain 24 to which the relative carriage 25 is secured, and a second operative position (Figure 5), reached along operative portion R1 of path R, wherein it is arranged at a maximum distance from said portion of the chain 24, crosses the entire gap 16 between conveyors 15 and has completed deformation of the base 4 of the relative bottle 2 into the second configuration.

In practice, in its first rest position, each plunger element 30 is detached from the base 4 of the relative bottle 2 advancing along path P.

Each plunger element 30 has a shaped end 35 adapted to cooperate in use with the recessed annular area 7 of the base 4 of the relative bottle 2; in particular, shaped ends 35 of plunger elements 30 have respective profiles complementary to the desired final profiles of the annular areas 7 of the bases 4 of the bottles 2 in their second configurations.

Each plunger element 30 has a cam follower roller 36 coupled in a sliding manner with an endless cam 37 formed on a fixed wall 38 arranged parallel to wall 27 and on the opposite side of conveyor 21 with respect to the wall 27 itself.

In particular, cam 37 is formed as an endless groove of wall 38, extending around chain 24.

More specifically, cam 37 has:
- a linear operative portion 37a, which is parallel and adjacent to path P and along which plunger elements 30 are maintained in their second operative positions;
- a return portion 37b, along which plunger elements 30 are maintained in their first rest positions;
- a first ramp-shaped portion 37c connecting one end of operative portion 37a to an adjacent end of return portion 37b and along which plunger elements 30 are moved from the first rest position to the second operative position; and
- a second ramp-shaped portion 37d connecting the other end of operative portion 37a to the other end of return portion 37b and along which plunger elements 30 are moved from the second operative position to the first rest position.

According to another possible alternative not shown, each plunger element 30 may be moved along its axis L by a fluidic actuator carried by the relative carriage 25.

According to a further possible alternative not shown, each plunger element 30 may be driven by an electric motor carried by the relative carriage 25 and coupled with a worm screw in turn connected to the plunger element 30 itself.

With reference to Figures 1, 3 and 5, upper retaining means 9 comprise a linear conveyor 40, distinct from conveyors 15, 21 and placed above horizontal plane Q on which transport branches 15a of conveyors the 15 themselves lie.

Conveyor 40 is preferably of belt type and includes a driving pulley 41, a driven pulley 42, both having respective axes M, N parallel to axes E, F, G, H, and an endless chain 43 wound about respective pulleys 41, 42 and having a linear operative branch 43a configured to cooperate in use with the caps 3, i.e. the top parts, of the bottles 2 advanced along path.

In particular, belt 43 comprises:
- the linear operative branch 43a which extends parallel to path P and to horizontal plane Q of transport branches 15a of conveyors 15;
- a return branch 43b, which is arranged above operative branch 43a; and
- curved connection portions 43c, which connect respective end portions of the operative branch 43a to corresponding end portions of the return branch 43b.

Operative branch 43a of belt 43 has the function to counteract from the top the force applied on bottles 3 from below to deform their bases 4 from the first configuration to the second configuration.

With reference to Figures 2, 3 and 5, forming apparatus 1 further comprises lateral retaining means 45 cooperating in use with the bottles 2 exiting from feed screw 11 to maintain them, along path P, at the spacings D imposed by the feed screw 11 itself.

Lateral retaining means 45 comprise a linear conveyor 46, distinct from conveyors 15, 21, 40, placed on one side of conveyor device 8 and provided with a plurality of retainers 47 moved by conveyor 46 along an endless path S having a linear operative portion S1, which is parallel and adjacent to path P and at which the retainers 47 cooperate laterally with respective bottles 2 to accompany them during the movement along path P imparted by the conveyor device 8 itself.

In particular, conveyor 46 is very similar to conveyor 21 and, like the latter, is of chain-type. It comprises a driving pulley 48, a driven pulley 49, both having respective vertical axes V, W orthogonal to axes E, F, G, H, L, M and to horizontal plane Q, and an endless chain 50 wound about respective pulleys 48, 49.

Retainers 47 are connected to respective equally spaced portions of chain 50 so as to be moved by the latter along path S; more specifically, retainers 47 are placed along chain 50 at the same spacings D between each other as the bottles 2 on which such retainers 47 are destined to act.

Conveyor 46 is synchronized with conveyors 15 and 21 so that each retainer 47 interact with one specific bottle 2 advanced along path P.

Chain 50 comprises:
- a linear operative branch 50a parallel and laterally adjacent to path P and defining linear operative portion S1 of path S;
- a linear return branch 50b, which is parallel to the operative branch 50a and is arranged on the opposite side of the operative branch 50 with respect to conveyor device 8; and
- curved connection portions 50c, which connect respective end portions of the operative branch 50a to corresponding end portions of the return branch 50b.

According to a possible alternative not shown, conveyor 21 may be also of belt-type or of any suitable type including an endless, flat transport element wound about at least two pulleys.

With reference to Figures 2, 3 and 5, each retainer 47 comprises a carriage 51 secured to a relative portion of chain 50 and coupled in a sliding manner with an endless fixed guide 52 extending parallel to chain 50.

In particular, guide 52 is formed as an endless rib protruding towards conveyor 46 from a fixed wall 53 arranged on one side of conveyor 46 and extending orthogonally to axes V, W of pulleys 48, 49 and parallel to transport branches 15a of conveyors 15. In the example shown in Figures 3 and 5, wall 53 is coplanar with transport branches 15a of conveyors 15.

In a completely analogous manner to carriages 25, each carriage 51 is provided with four wheels 55 sliding in pairs on opposite sides of guide 52; in this way, each carriage 51 is supported by the guide 52 during its motion imparted by chain 50.

Each retainer 47 further comprises an operative arm 56, which is adapted to cooperate in use with a relative bottle 2 advanced along path P and is carried by the relative carriage 51 in a sliding manner along an axis Z orthogonal to the portion of chain 50 to which the carriage 51 itself is connected.

In particular, when each retainer 47 runs along the portion S1 of path S, axis Z of the relative operative arm 56 extends horizontally and is orthogonal to such portion S1 and to the axis A of the bottle 2 on which such retainer 47 is destined to act.

In greater details, each operative arm 56 has a longitudinal bar 57 coupled in a sliding manner with two pairs of wheels 58 of the relative carriage 51 in such a way that the operative arm 56 is displaceable along the relative axis Z with respect to the carriage 51 itself. In this way, during its displacements along the relative axis Z, each operative arm 56 is guided by the wheels 58 of the relative carriage 51.

More specifically, each operative arm 56 moves axially between a first rest position (Figure 3), wherein it is arranged at a minimum distance from the portion of chain 50 to which the relative retainer 47 is secured, and a second operative position (Figure 5), reached along operative portion S1 of path S, wherein it is arranged at a maximum distance from said portion of the chain 50 and cooperates laterally with the relative bottle 2 advanced along path P.

Each operative arm 56 terminates with a U- or C-shaped retaining end 59, adapted to receive in use a relative bottle 2 advanced along path P. In practice, the retaining end 59 of each operative arm 56 partially encircles in use a relative bottle 2 to maintain it at a specific position on transport branches 15a of conveyors 15.

As visible in Figure 2, retaining ends 59 of operative arms 56 have respective profiles complementary to the hemicylindrical lateral profiles of the bottles 2 with which they cooperate.

Each operative arm 56 has a cam follower roller 60 coupled in a sliding manner with an endless cam 61 formed on a fixed wall 62 arranged parallel to wall 53 and on the opposite side of conveyor 46 with respect to the wall 53 itself.

In particular, cam 61 is formed as an endless groove of wall 62, extending around chain 50.

More specifically, cam 61 has:
- a linear operative portion 61a, which is parallel and adjacent to path P and along which operative arms 56 are maintained in their second operative positions;
- a return portion 61b, along which operative arms 56 are maintained in their first rest positions;
- a first ramp-shaped portion 61c connecting one end of operative portion 61a to an adjacent end of return portion 61b and along which operative arms 56 are moved from the first rest position to the second operative position; and
- a second ramp-shaped portion 61d connecting the other end of operative portion 61a to the other end of return portion 61b and along which operative arms 56 are moved from the second operative position to the first rest position.

According to another possible alternative not shown, each operative arms 56 may be moved along its axis Z by a fluidic actuator carried by the relative carriage 51.

According to a further possible alternative not shown, each operative arm 56 may be driven by an electric motor carried by the relative carriage 51 and coupled with a worm screw in turn connected to the operative arm 56 itself.

It is pointed out that the positions of conveyors 21 and 40 can be adjusted in a known manner with respect to conveyor device 8; in particular, conveyors 21 and 40 can be brought closer to, or moved away from, conveyor device 8 in order to adapt forming apparatus 1 to process different sizes of bottles 2. A similar adjustment can be done in a known manner on conveyor 46, which can be brought closer to, or moved away from, conveyor device 8.

In use, bottles 2 are fed to conveyor device 8 after being filled with the above-mentioned hot pourable product, closed with respective caps 3 and cooled to take the pourable product to the desired temperature.

As known, by the effect of the capping operation, heated air present in the top portion of each bottle 2, between the product and relative cap 3, expands causing a stress that tends to produce a general swelling of the bottle 2 itself. During the subsequent cooling, depressive stresses are generated within bottles 2 and tend to shrink them.

At the end of this operations (filing, capping and cooling), bases 4 of bottles 2 are deformed assuming the first configuration shown in Figure 3.

It may be noted that, also in the first configuration, central area 6 of base 4 of each bottle 2 does not project downwards beyond adjacent annular area 7; thereby, annular area 7 always ensures a stable support for the relative bottle 2.

At the entry of forming apparatus 1, bottles 2 are fed in succession onto horizontal transport branches 15a of conveyors 15 in their vertical positions; in practice, each bottle 2 has the side portions 17 of its base 4 resting on the respective transport branches 15a and its central area 7 facing linear gap 16.

During this step, bottles 2 interact with variable-pitch feed screw 11, which, by rotating about its axis B, brings the bottles 2 themselves at the desired spacings D between each other.

Prior to leaving feed screw 11, bottles 2 starts to cooperate with operative branch 43a of belt 43 of conveyor 40; in practice, caps 3 contact operative branch 43a of belt 43, which moves at the same speed as belts 20 of conveyors 15.

The action of operative branch 43a of belt 43 on caps 3 of the bottles 2 is maintained up to the end of the deformation operations carried out on the bottles 2 themselves by deformation devices 10, as it will be explained in greater details later on.

At the exit of feed screw 11, each bottle 2 is taken by a relative retainer 47 and maintained at the spacings D from the adjacent bottles 2 along the path P.

In particular, retainers 47 are moved by conveyor 46 at the same speed as the bottles 2 advanced along path P by conveyors 15.

More specifically, at the exit of feed screw 11, the operative arm 56 of each retainer 47 is moved by ramp-shaped portion 61c of cam 61 from the first rest position to the second operative position, in which embraces, with its retaining end 59, a relative bottle 2 (Figure 2).

During the subsequent movement of bottles 2 along path P, operative arms 56 of retainers 47 are maintained in their second operative positions by interaction of their cam follower rollers 60 with operative portion 61a of cam 61 (Figure 2).

Before each bottle 2 leaves feed screw 11, the plunger element 30 of the relative deformation device 10 approaching conveyors 15a starts to move along its axis L from the first rest position to the second operative position; this movement is produced by interaction of the cam follower roller 36 of such plunger element 30 with ramp-shaped portion 37c of cam 37 and ends when the relative bottle 2 has left feed screw 11.

During the movement of each plunger element 30 from the first rest position to the second operative position, the base 4 of the relative bottle 2 is deformed from the first to the second configuration, thus cancelling the depressive stresses acting within the bottle 2 itself.

Each plunger element 30 is then maintained into its second operative position along the entire operative portion R1 of path R so as to minimize the risks that, after deformation, the plastic material of the deformed base 4 of the relative bottle 2 may return to its initial condition.

At the end of operative portion R1 of path R, each plunger element 30 is moved along the relative axis L from the second operative position to the first rest position by interaction of its cam follower roller 36 with ramp-shaped portion 37d of cam 37; in this way, each plunger element 30 releases the relative bottle 2.

The same occurs for each retainer 47, which releases the relative bottle 2 by moving from the second operative position to the first rest position by interaction of its cam follower roller 60 with ramp-shaped portion 61d of cam 61.

The advantages of forming apparatus 1 according to the present invention will be clear from the foregoing description.

In particular, forming apparatus 1 may be used to replace any linear conveyor within a normal processing plant of bottles 2; this may translate into a significant reduction of the overall space occupied by the processing plant with respect to the known plants using carousel-type deformation machines.

In addition, forming apparatus 1 may be located immediately downstream of the cooling station so as to limit the extension of the zones of the processing plant in which it is necessary to convey bottles 2 having non-perfectly defined geometry caused by internal depressive stresses. This also produces an improvement in line efficiency and line filling with respect to known solutions.

Clearly, changes may be made to forming apparatus 1 as described herein without, however, departing from the scope of protection as defined in the accompanying claims.

## Claims

1. A forming apparatus (1) for forming a base (4) of a container (2) filled with a pourable product and closed with a closure element (3), said apparatus (1) comprising:
- first conveying means (8) supporting said container (2) at its base (4) and advancing said container (2) along a first path (P);
- upper retaining means (9) arranged above the first path (P) and cooperating in use with a top part (3) of said container (2) advanced by the first conveying means (8); and
- at least one deformation device (10), which is arranged below the first path (P), is advanced in use to follow said container (2) moving along the first path (P) and is configured to interact with said container (2) to deform its base (4) from a first configuration, in which said base (4) is swollen and defines a maximum internal volume of said container (2), to a second configuration, in which said base (4) is at least in part retracted inwardly of the container (2) with respect to the first configuration so as to define an internal volume of the container (2) itself smaller than that in the first configuration;
**characterized in that** said first conveying means (8) comprise two substantially parallel first linear conveyors (15) arranged side by side, defining a gap (16) therebetween and having respective horizontal linear transport branches (15a) lying in a common horizontal plane (Q) and configured to support respective opposite side portions (17) of the base (4) of said container (2); said apparatus (1) further comprising second conveying means (21) distinct from said first conveying means (8), arranged below said first path (P) and configured to advance said deformation device (10) along a second path (R), distinct from the first path (P) and having a linear operative portion (R1), which is parallel to said first path (P) and along which said deformation device (10) extends within said gap (16).

2. The apparatus as claimed in claim 1, wherein said second conveying means comprise a second linear conveyor (21) including an endless, flat transport element (24), in particular of belt- or chain-type, wound about at least two pulleys (22, 23); and wherein said deformation device (10) comprises a main body (25), connected to the transport element (24) of the second conveyor (21) to be advanced by the transport element (24) itself along said second path (R), and a plunger element (30) adapted to deform in use the base (4) of said container (2) and carried by said main body (25) in a movable manner along an axis (L) transversal to the portion of the transport element (24) to which said main body (25) is connected.

3. The apparatus as claimed in claim 2, wherein, when the deformation device (10) runs along the operative portion (R1) of the second path (R), said axis (L) of movement of said plunger element (30) is transversal to said operative portion (R1).

4. The apparatus as claimed in claim 2 or 3, further comprising actuator means (36, 37) to selectively move the plunger element (30) along said axis (L) as the plunger element (30) advances along the operative portion (R1) of the second path (R); said plunger element (30) being moved by said actuator means (36, 37) between a first position, in which said plunger element (30) is detached from the base (4) of said container (2) advancing along said first path (P), and a second position, in which said plunger element (30) has completed the deformation of said base (4) of said container (2) into said second configuration.

5. The apparatus as claimed in claim 4, wherein said actuator means comprise a fixed cam (37) and a cam follower (36) carried by said plunger element (30) and cooperating in a sliding manner with said cam during the displacement of said deformation device (10) along the operative portion (R1) of the second path (R).

6. The apparatus as claimed in claim 5, wherein said cam (37) has an endless configuration, extends parallel to the second path (R) and has an operative portion (37a) configured so as to determine the displacement of the plunger element (30) from the first to the second position and vice versa.

7. The apparatus as claimed in any one of the foregoing claims, wherein said upper retaining means (9) comprise a third linear conveyor (40), distinct from said first and second conveying means (8, 21), placed above said first conveying means (8) and including an endless, flat transport element (43), in particular of belt-type, wound about at least two pulleys (41, 42) and having a linear operative branch (43a) configured to cooperate in use with the top part (3) of said container (2) and extending parallel to the horizontal plane (Q) on which the transport branches (15a) of the first linear conveyors (15) lie.

8. The apparatus as claimed in any one of the foregoing claims for forming the bases (4) of a plurality of said containers (2) advanced along said first path (P) by said first conveying means (8), further comprising lateral retaining means (45) cooperating in use with said containers (2) to maintain them, along said first path (P), at given spacings (D) between each other.

9. The apparatus as claimed in claim 8, wherein said lateral retaining means (45) comprise a fourth linear conveyor (46) placed on one side of said first conveying means (8) and provided with a plurality of retainers (47) moved by said fourth linear conveyor (46) along an endless third path (S) having a linear operative portion (S1), which is parallel and adjacent to said first path (P) and along which the retainers (47) cooperate laterally with the respective containers (2) to accompany them during their movements along said first path (P) imparted by said first conveying means (8).

## Patentansprüche

1. Formungsvorrichtung (1) zum Formen eines Bodens (4) eines Behälters (2), der mit einem gießbaren Produkt gefüllt und mit einem Verschlusselement (3) verschlossen ist, wobei die Vorrichtung (1) umfasst:
- erste Fördermittel (8), die den Behälter (2) an seinem Boden (4) tragen und den Behälter (2) einen ersten Pfad (P) entlang vorwärts bewegen;
- obere Haltemittel (9), die oberhalb des ersten Pfads (P) angeordnet sind und bei Gebrauch mit einem oberen Teil (3) des Behälters (2) zusammenwirken, der durch die ersten Fördermittel (8) vorwärts bewegt wird; und
- mindestens eine Verformungseinrichtung (10), die unterhalb des ersten Pfads (P) angeordnet ist, bei Gebrauch vorwärts bewegt wird, um dem Behälter (2) zu folgen, der sich den ersten Pfad (P) entlang bewegt, und ausgestaltet ist, um mit dem Behälter (2) zu interagieren, um dessen Boden (4) von einer ersten Ausgestaltung, in der der Boden (4) aufgebläht ist und ein maximales Innenvolumen des Behälters (2) definiert, zu einer zweiten Ausgestaltung zu verformen, in der der Boden (4) mindestens teilweise nach innen in den Behälter (2) relativ zu der ersten Ausgestaltung eingezogen ist, um so ein Innenvolumen des Behälters (2) zu definieren, das selbst kleiner als dasjenige in der ersten Ausgestaltung ist;
**dadurch gekennzeichnet, dass** das erste Fördermittel (8) zwei im Wesentlichen parallele erste lineare Förderer (15) umfasst, die nebeneinander angeordnet sind, eine Lücke (16) zwischen ihnen definieren und jeweilige horizontale lineare Transportarme (15a) aufweisen, die in einer gemeinsamen horizontalen Ebene (Q) liegen und ausgestaltet sind, um jeweilige Gegenseitenabschnitte (17) des Bodens (4) des Behälters (2) zu tragen; wobei die Vorrichtung (1) ferner zweite Fördermittel (21) umfasst, die von den ersten Fördermitteln (8) verschieden sind, unterhalb des ersten Pfads (P) angeordnet sind und ausgestaltet sind, um die Verformungseinrichtung (10) einen zweiten Pfad (R) entlang zu vorwärts zu bewegen, der von dem ersten Pfad (P) verschieden ist und einen linearen Wirkabschnitt (R1) aufweist, der parallel zu dem ersten Pfad (P) ist und entlang dessen sich die Verformungseinrichtung (10) innerhalb der Lücke (16) erstreckt.

2. Vorrichtung nach Anspruch 1, wobei die zweiten Fördermittel einen zweiten linearen Förderer (21) umfassen, der ein endloses ebenes Transportelement (24) einschließt, insbesondere vom Riemen- oder Kettentyp, das um mindestens zwei Rollen (22, 23) gewickelt ist, und wobei die Verformungseinrichtung (10) einen Hauptkörper (25) umfasst, der mit dem Transportelement (24) des zweiten Förderers (21) verbunden ist, um durch das Transportelement (24) selbst den zweiten Pfad (R) entlang vorwärts bewegt zu werden, und ein Kolbenelement (30), das adaptiert ist, um bei Gebrauch den Boden (4) des Behälters (2) zu verformen, und das durch den Hauptkörper (25) in beweglicher Weise eine Achse (L) entlang getragen wird, die quer zu dem Abschnitt des Transportelements (24) liegt, mit dem der Hauptkörper (25) verbunden ist.

3. Vorrichtung nach Anspruch 2, wobei die Achse (L) der Bewegung des Kolbenelements (30), wenn die Verformungseinrichtung (10) den Wirkabschnitt (R1) des zweiten Pfads (R) entlang läuft, quer zu dem Wirkabschnitt (R1) ist.

4. Vorrichtung nach Anspruch 2 oder 3, ferner umfassend Stellmittel (36, 37) zum selektiven Bewegen des Kolbenelements (30) entlang der Achse (L), wenn sich das Kolbenelement (30) den Wirkabschnitt (R1) des zweiten Pfads (R) entlang vorwärts bewegt; wobei das Kolbenelement (30) durch die Stellmittel (36, 37) zwischen einer ersten Position, in der das Kolbenelement (30) von dem Boden (4) des Behälters (2) gelöst ist, der sich den ersten Pfad (P) entlang vorwärts bewegt, und einer zweiten Position bewegt wird, in der das Kolbenelement (30) die Verformung des Bodens (4) des Behälters (2) zu der zweiten Ausgestaltung abgeschlossen hat.

5. Vorrichtung nach Anspruch 4, wobei die Stellmittel einen feststehenden Nocken (37) und einen Nockenstößel (36) umfassen, der von dem Kolbenelement (30) getragen wird und während des Verschiebens der Verformungseinrichtung (10) entlang des Wirkabschnitts (R1) des zweiten Pfades (R) in gleitender Weise mit dem Nocken zusammenwirkt.

6. Vorrichtung nach Anspruch 5, wobei der Nocken (37) eine Endlosausgestaltung aufweist, sich parallel zu dem zweiten Pfad (R) erstreckt und einen Wirkabschnitt (37a) aufweist, der so ausgestaltet ist, dass er die Verschiebung des Kolbenelements (30) von der ersten zu der zweiten Position und anders herum bestimmt.

7. Vorrichtung nach einem der vorhergehenden Ansprüche, wobei die oberen Haltemittel (9) einen dritten linearen Förderer (40) umfassen, der von dem ersten und zweiten Fördermittel (8, 21) verschieden ist, oberhalb der ersten Fördermittel (8) platziert ist und ein endloses ebenes Transportelement (43) einschließt, insbesondere vom Riementyp, das um mindestens zwei Rollen (41, 42) gewickelt ist und einen linearen Wirkarm (43a) aufweist, der ausgelegt ist, um bei Gebrauch mit dem oberen Teil (3) des Behälters (2) zusammenzuwirken, und sich parallel zu der horizontalen Ebene (Q) erstreckt, auf der die Transportarme (15a) der ersten linearen Förderer (15) liegen.

8. Vorrichtung nach einem der vorhergehenden Ansprüche zum Formen der Böden (4) einer Vielzahl der Behälter (2), die durch die ersten Fördermittel (8) den ersten Pfad (P) entlang vorwärts bewegt werden, ferner umfassend seitliche Haltemittel (45), die bei Gebrauch mit den Behältern (2) zusammenwirken, um sie entlang des ersten Pfades (P) in gegebenen Abständen (D) zwischen ihnen zu bewahren.

9. Vorrichtung nach Anspruch 8, wobei die seitlichen Haltemittel (45) einen vierten linearen Förderer (46) umfassen, der an einer Seite der ersten Fördermittel (8) platziert ist und mit einer Vielzahl von Halterungen (47) ausgestattet ist, die durch den vierten linearen Förderer (46) einen endlosen dritten Pfad (S) mit einem linearen Wirkabschnitt (S1) entlang bewegt werden, der parallel zu dem ersten Pfad (P) verläuft und neben diesem liegt, und entlang dessen die Halterungen (47) seitlich mit den jeweiligen Behältern (2) zusammenwirken, um sie während ihrer Bewegungen entlang des ersten Pfades (P) zu begleiten, die durch die ersten Fördermittel (8) verliehen werden.

## Revendications

1. Appareil de formage (1) pour former une base (4) d'un récipient (2) rempli avec un produit liquide et fermé avec un élément de fermeture (3), ledit appareil (1) comprenant:
- des premiers moyens de transport (8) qui supportent ledit récipient (2) à sa base (4) et qui font avancer ledit récipient (2) le long d'un premier chemin (P);
- des moyens de retenue supérieurs (9) agencés au-dessus du premier chemin (P) et qui coopèrent lors de l'utilisation avec une partie supérieure (3) dudit récipient (2), qui est avancé par les premiers moyens de transport (8); et
- au moins un dispositif de déformation (10), qui est agencé en dessous du premier chemin (P), qui est avancé lors de l'utilisation de manière à suivre ledit récipient (2) qui se déplace le long du premier chemin (P) et qui est configuré de manière à interagir avec ledit récipient (2) afin de déformer sa base (4) à partir d'une première configuration, dans laquelle ladite base (4) est gonflée et définit un volume interne maximum dudit récipient (2), jusqu'à une seconde configuration, dans laquelle ladite base (4) est au moins en partie rétractée vers l'intérieur du récipient (2) par rapport à la première configuration de manière à définir un volume interne du récipient (2) lui-même plus petit que celui de la première configuration;
**caractérisé en ce que** lesdits premiers moyens de transport (8) comprennent deux premiers convoyeurs linéaires sensiblement parallèles (15) agencés côte à côte, qui définissent un espace (16) entre eux et qui présentent des branches de transport linéaire horizontales respectives (15a) s'étendant dans un plan horizontal commun (Q) et configurées de manière à supporter des parties latérales opposées respectives (17) de la base (4) dudit récipient (2); ledit appareil (1) comprenant en outre des seconds moyens de transport (21) distincts desdits premiers moyens de transport (8), agencés en dessous dudit premier chemin (P) et configurés de manière à faire avancer ledit dispositif de déformation (10) le long d'un deuxième chemin (R), distinct du premier chemin (P) et présentant une partie opérationnelle linéaire (R1), qui est parallèle audit premier chemin (P) et le long de laquelle ledit dispositif de déformation (10) s'étend à l'intérieur dudit espace (16).

2. Appareil selon la revendication 1, dans lequel lesdits seconds moyens de transport comprennent un deuxième convoyeur linéaire (21) comprenant un élément de transport plat sans fin (24), en particulier de type courroie ou chaîne, enroulé autour d'au moins deux poulies (22, 23); et dans lequel ledit dispositif de déformation (10) comprend un corps principal (25), connecté à l'élément de transport (24) du deuxième convoyeur (21) à faire avancer par l'élément de transport (24) lui-même le long dudit deuxième chemin (R), et un élément de plongeur (30) apte à déformer lors de l'utilisation la base (4) dudit récipient (2) et porté par ledit corps principal (25) d'une manière mobile le long d'un axe (L) transversal à la partie de l'élément de transport (24) auquel ledit corps principal (25) est connecté.

3. Appareil selon la revendication 2, dans lequel, lorsque le dispositif de déformation (10) court le long de la partie opérationnelle (R1) du deuxième chemin (R), ledit axe (L) de déplacement dudit élément de plongeur (30) est transversal à ladite partie opérationnelle (R1).

4. Appareil selon la revendication 2 or 3, comprenant en outre des moyens d'actionneur (36, 37) pour déplacer de façon sélective l'élément de plongeur (30) le long dudit axe (L) lorsque l'élément de plongeur (30) avance le long de la partie opérationnelle (R1) du deuxième chemin (R); ledit élément de plongeur (30) étant déplacé par lesdits moyens d'actionneur (36, 37) entre une première position, dans laquelle ledit élément de plongeur (30) est détaché de la base (4) dudit récipient (2) qui avance le long dudit premier chemin (P), et une seconde position, dans laquelle ledit élément de plongeur (30) a terminé la déformation de ladite base (4) dudit récipient (2) dans ladite seconde configuration.

5. Appareil selon la revendication 4, dans lequel lesdits moyens d'actionneur comprennent une came fixe (37) et un galet de came (36) porté par ledit élément de plongeur (30) et qui coopère d'une manière coulissante avec ladite came pendant le déplacement dudit dispositif de déformation (10) le long de la partie opérationnelle (R1) du deuxième chemin (R).

6. Appareil selon la revendication 5, dans lequel ladite came (37) présente une configuration sans fin, s'étend parallèlement au deuxième chemin (R) et présente une partie opérationnelle (37a) configurée de manière à déterminer le déplacement de l'élément de plongeur (30) à partir de la première jusqu'à la seconde position et vice versa.

7. Appareil selon l'une quelconque des revendications précédentes, dans lequel lesdits moyens de retenue supérieurs (9) comprennent un troisième convoyeur linéaire (40), distinct desdits premier et second moyens de transport (8, 21), placé au-dessus desdits premiers moyens de transport (8) et comprenant un élément de transport plat sans fin (43), en particulier de type courroie, enroulé autour d'au moins deux poulies (41, 42) et présentant une branche opérationnelle linéaire (43a) configurée de manière à coopérer lors de l'utilisation avec la partie supérieure (3) dudit récipient (2) et s'étendant parallèlement au plan horizontal (Q) sur lequel les branches de transport (15a) des premiers convoyeurs linéaires (15) sont situées.

8. Appareil selon l'une quelconque des revendications précédentes pour former les bases (4) d'une pluralité desdits récipients (2) avancés le long dudit premier chemin (P) par lesdits premiers moyens de transport (8), comprenant en outre des moyens de retenue latéraux (45) qui coopèrent lors de l'utilisation avec lesdits récipients (2) afin de maintenir ceux-ci, le long dudit premier chemin (P), avec des espacements donnés (D) entre eux.

9. Appareil selon la revendication 8, dans lequel lesdits moyens de retenue latéraux (45) comprennent un quatrième convoyeur linéaire (46) placé sur un côté desdits premiers moyens de transport (8) et pourvus d'une pluralité d'éléments de retenue (47) déplacés par ledit quatrième convoyeur linéaire (46) le long d'un troisième chemin sans fin (S) présentant une partie opérationnelle linéaire (S1), qui est parallèle et adjacente audit premier chemin (P) et le long duquel les éléments de retenue (47) coopèrent latéralement avec les récipients respectifs (2) afin de les accompagner pendant leurs déplacements le long dudit premier chemin (P) imprimés par lesdits premiers moyens de transport (8).
